# EUROPEAN PATENT SPECIFICATION

(11) **EP 1 521 071 B1**
(45) Date of publication and mention of the grant of the patent: **12.01.2011**
(21) Application number: 04008812.2
(22) Date of filing: 14.04.2004
(51) Int. Cl.: G01L 1/12, G01L 9/00

(54) **Dynamometrical sensor device, manufacturing process and detection system therefrom**
Kraftmesszelle, Herstellungsverfahren und Erfassungssystem dafür
Cellule de mesure dynamométrique, procédé de fabrication et dispositif de détection équipé de ladite cellule

(30) Priority: 03.10.2003 IT TO20030774
(43) Date of publication of application: 06.04.2005
(73) Proprietor: C.R.F. Società Consortile per Azioni, 10043 Orbassano (Torino) (IT)
(72) Inventor: Pullini, Daniele, c/o, 10043 Orbassano (Torino) (IT); Martorana, Brunetto, c/o, 10043 Orbassano (Torino) (IT); Lambertini, Vito, 10049 Giaveno (Torino) (IT)
(74) Representative: Gallarotti, Franco

(56) References cited:
- EP-A- 0 650 139
- WO-A-01/06219
- US-A1- 2002 178 831
- US-A1- 2004 265 150
- US-B1- 6 476 113
- US-B1- 6 507 187

## Description

The present invention relates to a magnetic dynamometric sensing device of the type comprising means for sensing a magnetic field imposed on said sensor means by a magnetisation of a movable structure associated to a source of magnetic field, said sensor means detecting, through variations in said magnetic field, displacements of said movable structure originated by the application of dynamometric quantities.

It is specified that the expression 'dynamometric sensor' as used herein includes force sensors and sensors of quantities derivable from force, such as accelerations and pressures in particular.

In the field of dynamometric sensors, the most widely used devices for applications requiring on site measurements by means of sensors employing thin film technology, are so-called 'strain gauge' devices, which substantially use platelets whereon are laid bridges formed by piezoelectric material. Such sensors are analog and occasionally can be unsuited for detecting acceleration or pressure thresholds with sufficient sensitivity and switching speed.

Also known are thin film magnetic sensors that exploit the magnetostrictive properties of magnetic layers. However, such layers are difficult to construct, are fragile, and have limited sensitivity.

US Patent no. 6 507 187 discloses a device for measuring displacements in accelerometers, which comprises a magneto-resistive sensor with a variable electrical resistance, based on an imposed magnetic field. Said device senses displacements by means of changes in the local magnetic field on the magnetic resistive sensor, originated by the displacement of a hard magnetic layer positioned on a movable microstructure. However, a similar solution encounters difficulties in the coupling of the magnetic layer on the mobile microstructure, making the production process difficult and costly; moreover, it is also fragile.

Document EP-A-0 650 139 discloses an active surface structure sensitive to pressure, including a flexible magnetic sheet on a plate, which carries detection elements including magnetic sensitive elements.

The object of the present invention is to provide a solution able to fabricate a magnetic dynamometric sensor device by thin film technology that can be easily obtained and is highly robust and sensitive.

According to the present invention, said object is achieved thanks to a dynamometric sensor device and to a corresponding manufacturing method, as well as a dynamometric sensing system having the characteristics specifically set out in the claims that follow.

The invention shall be described with reference to the accompanying drawings, provided purely by way of non limiting example, in which:
- Figure 1 shows a schematic diagram of a spin valve magnetic device;
- Figure 2 is a schematic diagram of a first embodiment of a dynamometric sensor device according to the invention.
- Figure 3 is a schematic diagram of a variant to the first embodiment of the dynamometric sensor device according to the invention;
- Figures 4a and 4b show, in diagram form, two variants of a second embodiment of the dynamometric sensor device according to the invention;
- Figure 5 is a schematic diagram of a third variant of the first embodiment of the dynamometric sensor device according to the invention;
- Figure 6 is a schematic diagram of a third variant of the second embodiment of the dynamometric sensor device according to the invention;
- Figures 7a, 7b and 7c show additional embodiments of the embodiment of the dynamometric sensor device according to the invention.

The proposed dynamometric sensor device substantially exploits, for the measurement, magnetic devices that are sensitive to the direction of a magnetic field and/or to the magnetic field gradient.

The proposed dynamometric sensor device therefore comprises a movable magnetic part, in cantilever form, or an elastic membrane, whose position is remotely determined by a magnetic reading unit.

The application of an external force to said movable part causes its oscillation, torsion or flexion, depending on the nature of the movable part. As stated, said external force can be determined by a pressure, for example of a gas, and in this case the device thus operates as a magnetically operated pressure sensor, or such force can be provided by an impulse of mechanical force or by the inertia of the movable part, for example the inertia of a vibrating cantilever, in which case the device is configured as an accelerometer.

By effect of such an external force, the movable magnetic part moves farther from or closer to a magnetic sensor constrained in a fixed position. The direction of magnetisation of the movable magnetic part is preferably orthogonal to the axis of easy magnetisation of the magnetic field sensor, i.e. to the direction along which the magnetisation of said magnetic field sensor is oriented in the absence of an external magnetic field.

According to a main aspect of the invention, the movable magnetic part is constituted by movable composite magnetic elastomeric structures.

In regard to the magnetic field sensor, preferably sensor structures based on 'spin valve' devices are used.

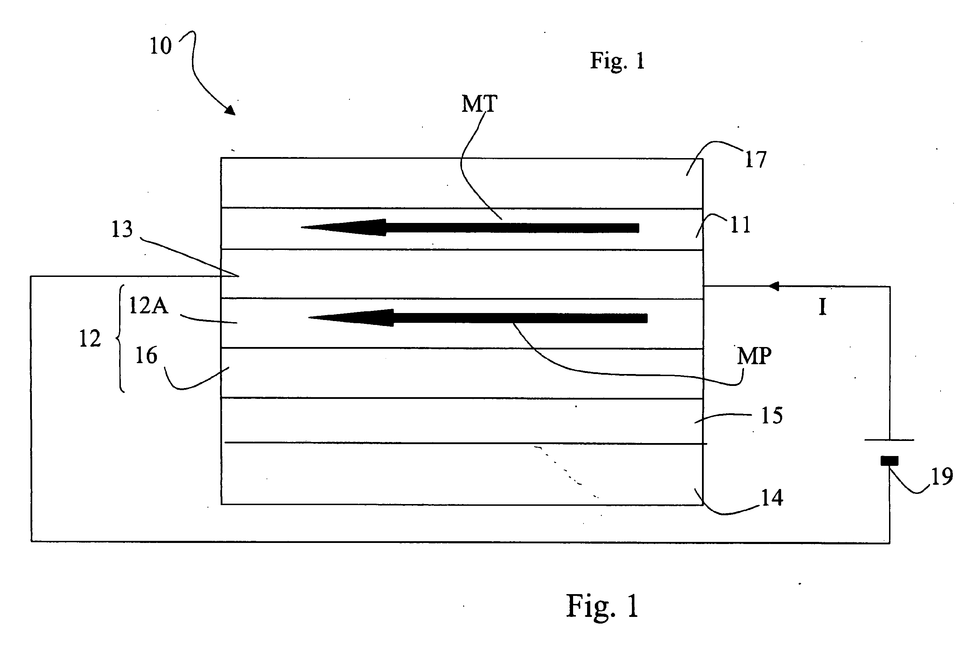

The structure of a spin valve magnetic device 10 is shown schematically in Figure 1. Said spin valve 10 comprises a plurality of stacked layers of different materials. This plurality of layers comprises, in particular, a substrate 14, for example a glass substrate, whereon is laid a growth layer 15, also called seed layer, obtained for example by a layer of tantalum, which acts as a seed for the growth of a permanent magnetic layer 12.

In Figure 1, said permanent magnetic layer 12 is shown comprising two layers, a pinned magnetic layer 12A, also called 'pinned layer' and a pinning antiferromagnetic layer 16, also called 'pinning layer'. The antiferromagnetic layer 16 produces a short radius magnetic field that influences and pins a permanent magnetisation MP of the pinned layer 12A, which can no longer follow an external magnetic field. The set of the layers 12A and 16 behaves in fact as a permanent magnet with high magnetic coercivity and provides a reference field to the spin valve 10.

The permanent magnetic field 12 can alternatively be obtained by the simple deposition of a single hard magnetic layer, for example a layer of cobalt.

The antiferromagnetic layer 16 of the spin valve 10 is obtained, for example, by means of a NiMn alloy. Said antiferromagnetic layer 16 is then coated by a passivating layer 17, also made of tantalum.

Above to the permanent magnetic layer 12 is placed a non ferromagnetic spacer layer 13.

The use is known of a thin layer of copper to obtain said spacer layer 13 if the spin valve 10 is of a GMR (Giant Magneto Resistance) spin valve, or a dielectric layer, for instance an oxide like Al₂O₃ or SiOₓ, if the spin valve 10 is a TMR (Tunnel junction Magneto Resistance) spin valve. On the spacer layer 13 is laid a free magnetic layer 11.

The free magnetic layer 11 is constituted by a soft magnetic material, such as an iron-nickel alloy like permalloy, provided with a temporary, i.e. non permanent, magnetisation. Said free magnetic layer 11 serves the purpose of orienting its temporary magnetisation MT following the external magnetic field to be measured.

The spin valve 10 shown in Figure 1 is of the CIP (current in plane) type, i.e. to the spin valve, by means of a generator 19, is applied a current I that flows in planar fashion in the spacer layer 13 and in the other layers of the spin valve 10. The spacer layer 13 then is the layer that contributes most to determine the electrical resistance of the spin valve 10 in the absence of a magnetic field. It is also possible to have a CPP configuration (Current Perpendicular to Plane), in which the current I is forced to traverse vertically the stacked layers of the spin valve.

In the absence of an external magnetic field, the spin valve shown in Figure 1 is in ferromagnetic configuration, i.e. the free magnetic layer 11 and the permanent magnetic layer 12 have the same direction of magnetisation. Thus in this case the spin valve has high electrical conductivity, since the path of the electrons inside the device undergoes substantially no scattering.

In the presence of an external magnetic field whose direction is opposite to the reference magnetic field, due to the permanent magnetic field, of the spin valve, the spin valve is in anti-ferromagnetic configuration and it has low electrical conductivity. The path of the electrons in the spacer layer and in the entire spin valve has to be subjected to a considerable scattering phenomenon.

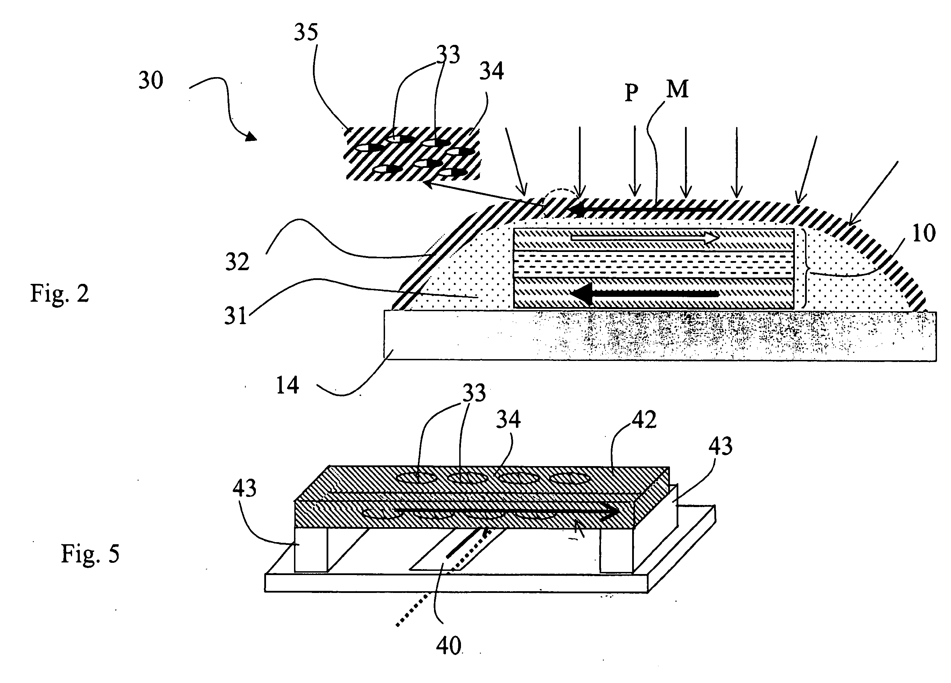

Figure 2 shows a first embodiment of the proposed dynamometric device, in the form of a pressure sensor device 30, which comprises a compressible layer 31 constituted by an elastomer in the form of a gel, foam, or a compressible liquid. The compressible layer 31 is contained inside a membrane 32 that constitutes a high coercivity magnetic layer made of composite material 34, constituted by elastic matrix 35, which can be an elastomer polymer or an elastic resin, in which are incorporated magnetic particles 33, i.e. particles able to have a residual magnetisation, whose dimension may vary between a millimetre and a nanometre, oriented by means of an external magnetic field during the deposition phase, for instance a process of casting in a magnetic field.

The saturation magnetisation of individual particles 33, their density and dimensions determine the final saturation magnetisation of the permanent magnet, i.e. a magnetisation M of the membrane 32.

The magnetic particles 33 can be obtained separately, ex-situ, or in situ inside the polymer that constitutes the elastic matrix 35 of the composite material 34, for example obtaining an EFC structure (Elastomer Ferromagnetic Composite).

The in situ deposition technique entails chemical formation in the polymer. The magnetic particles are formed chemically before polymerisation, then the polymer reticulates.

According to the ex-situ technique, the particle is produced and subsequently mixed into the polymer, which then reticulates.

Starting from the mixture of magnetic particles and not yet polymerised polymer, one can:
- perform a casting process in a mould;
- perform an extrusion using an extruder;
- perform a hot embossing process, or pressure moulding with heated mould;
- perform an injection moulding process.

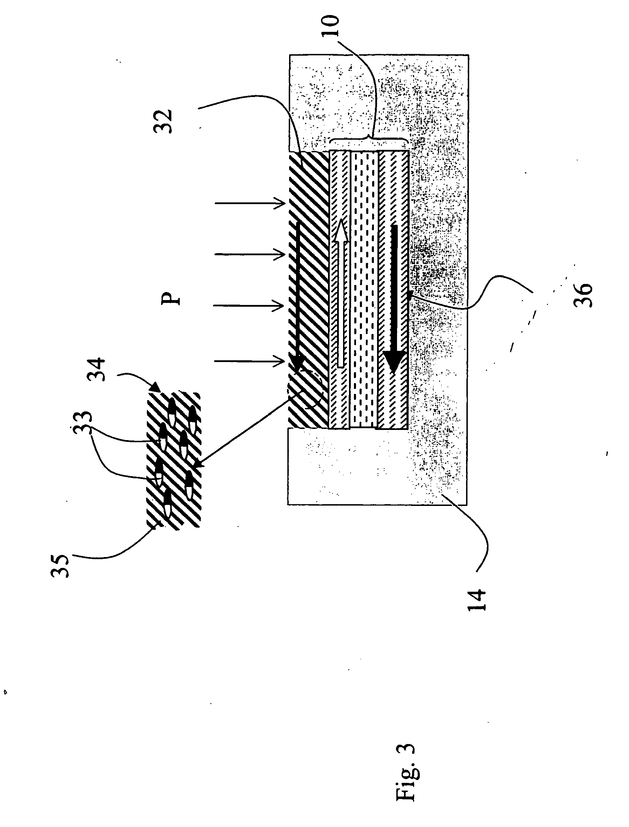

Figure 3 shows a variant to the pressure sensor device of Figure 2, substantially similar with the exception of the elimination of the compressible layer 31. On the spin valve 10 is directly deposited the membrane 32, constituting the high coercivity layer of composite material 34 comprising magnetic particles 33 in an elastic matrix 35, as in the case shown in Figure 2. In other words, the high coercivity magnetic membrane 32 also performs the function of compressible layer under the action of pressure P. The density of the particles 33 in the elastic matrix 35 changes with external pressure P and consequently varies the magnetisation M and the related intensity of the magnetic field thus generated. Moreover, when the membrane 32 is compressed downwards, the force lines generated by the magnetic particles 33 are also lowered and are able to cause the temporary magnetisation MT of the free magnetic layer 11 to switch.

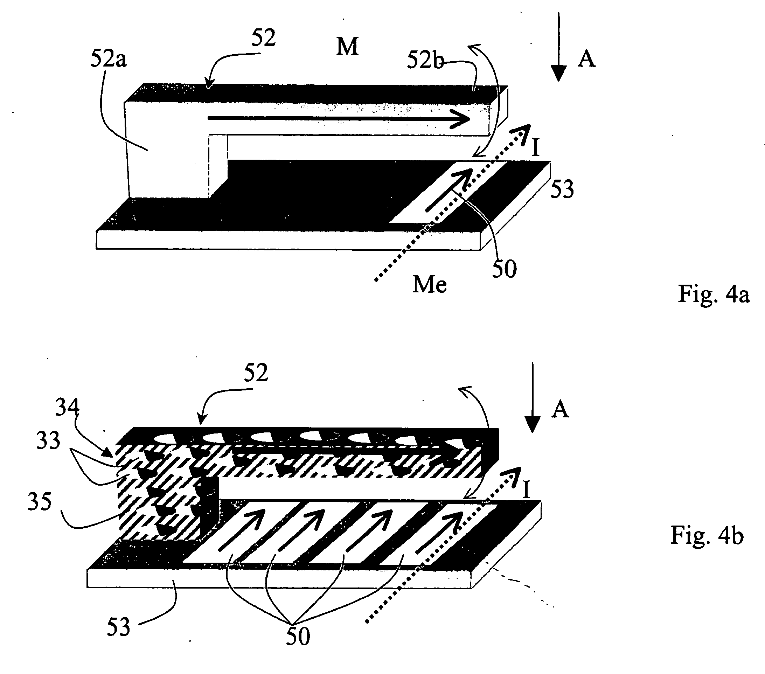

Figure 4a shows an embodiment, suitable to measure an acceleration A, but possibly also pressures, in which the movable magnetic part is obtained, instead of by means of a membrane as in the embodiments of Figure 2 and 3, by means of a cantilever 52, also obtained by means of magnetic particles 33 in an elastic matrix 35. Said cantilever 52, which is substantially a beam with a first end 52a fixed to a substrate 53 and a second free end 52b, has a magnetisation M with orthogonal direction to an axis of easy magnetisation Me of a magnetic field sensor 50 positioned on the substrate 53 underneath the free end 52b. Said magnetic sensor 50 in the embodiment described herein is a simple magneto-resistive sensor, traversed by an electric current I in order to measure its variations in electrical resistance, however it is naturally possible to use other sensors, such as the spin valve 10 of Figure 1. When said free end 52b of the cantilever 52 approaches the sensor 50, which can also be constituted by a matrix of sensors, tends to rotate the magnetisation Me of the sensor 50 along its direction. The sensor 50 has two different values of electrical current, depending on whether the direction of its magnetisation M is parallel to the axis of easy magnetisation Me or not.

The direction of magnetisation of the cantilever 52 and the axis of easy magnetisation Me of the sensor 50 can be different, and there can be multiple coupling solutions, said configurations determining different dynamic fields of operation of the device, sensitivity, performance.

In particular, instead of the sensor 50, the spin valve 10 of Figure 1 can be used, suitably aligned relative to the direction M of magnetisation of the cantilever 52.

The cantilever 52 is constructed, as shown in Figure 4b, also made of composite magnetic material 34, comprising the elastic matrix 35, which can be a polymer or an elastic resin, in which are incorporate magnetic particles 33, i.e. particles able to have a residual magnetisation, whose dimension may vary between a millimetre and a nanometre, oriented by means of an external magnetic field during the laying phase.

The sensor device shown in Figure 4b comprises a plurality of sensors 50, arranged along the cantilever 52 with their axes of easy magnetisation Me in parallel and orthogonal to the magnetisation M of said cantilever 52. Such a configuration allows greater sensitivity, maximisation of the output current I, and precision in the measurement, as well as the increase in the signal/noise ratio. The plurality of sensors 50 can be connected in series configuration, parallel, or with Wheatstone bridge. The Wheatstone bridge configuration provides two sensors 50 which operate only as electrical resistors because they are shielded by means of shielding parts, as well as two other sensors 50 which operate on their own, measuring the magnetic field, whilst flux concentrators are arranged to concentrate flux on these two latter sensors. Said two sensors 50 are mutually oriented in such a way that in the presence of magnetic field one is arranged in parallel configuration (ferromagnetic configuration F), the other in anti-parallel configuration (Anti-ferromagnetic configuration AF), so that the difference between their produced signals constitutes the output signal of the device, maximising the signal to noise ratio.

The plurality of sensors 50 thus need not necessarily comprise identical sensors. On each sensor can be applied, as needed, magnetic flux concentrators, and magnetic field shields.

If the magnetic field sensor used in association with the cantilever 52 is also able to measure the magnetic field gradient, the direction of the magnetisation M of the cantilever 52 can also be parallel to the axis of easy magnetisation Me of the sensor 50. In a device thus conceived, the values assumed by the output current I of the sensor depend only on the distance of the cantilever 52 relative to the magnetic field sensor 50.

It is also possible to use sensors in which the values assumed by the output current of the sensor depend both on the distance, or air gap, from the permanent magnet, i.e. the cantilever in Figure 4a or the membrane in Figure 2, and on the direction of magnetisation. For such a device, multiple angular couplings between cantilever magnetisation and axes of easy magnetisation are possible.

The dynamometric sensor device of Figure 4a, using the cantilever 52, can be obtained in different dimensions. If the dimensions are micrometric, it can be obtained by means of photolithography, laser ablation, spinning or serigraphy of the composite polymer with the aid of sacrificial layers to make the cantilever suspended.

To deposit the layers, sputtering, thermal or electron beam evaporation, serigraphy techniques can be used.

The substrates can be of different kinds such as plastic, vitreous, ceramic or semiconductor, such as silicon.

The dynamometric sensor device of Figure 4a can be incorporated in a more complex system, which allows remotely to measure a dynamometric quantity, in particular associated to a moving element. Instead of the magnetic sensor 50 can be provided a soft ferromagnetic layer, similar to the free layer 11 of Figure 1, which is easily oriented by the magnetisation of the cantilever. Said soft ferromagnetic layer will then determine in a region of space a magnetic field that can vary according to the position of the cantilever, which in turn is a function of a force, of an acceleration or of a pressure. Said variable magnetic field can be measured by an additional magnetic field sensor, positioned remotely. Such a solution is particularly suitable for the detection of dynamometric quantities of a movable element in translation or in rotation, whereon are fastened the cantilever and the soft ferromagnetic layer, relative to a fixed element, whereon is fastened the additional magnetic field sensor.

This system can be used to read the acceleration or the pressure or other physical quantities of a movable part, such as a tyre, positioning the additional magnetic field sensor in a point on the frame.

All embodiments, including those of Figure 2 and 3, can be employed for this purpose.

Moreover, it should be noted that the variants of the cantilever solution, in particular in regard to number and configuration of the sensors, equally apply to the membrane solutions such as the ones shown in Figures 2 and 3. It should also be noted that such solutions can also include the embodiment shown in Figure 5, in which is provided a membrane 42, also made of composite magnetic material, which is suspended by means of two respective supports 43 above a sensor 40. In this case, the membrane 42 oscillates like an elastic beam, under the action of acceleration, varying the magnetic field imposed on the sensor 40, which is below its medium point.

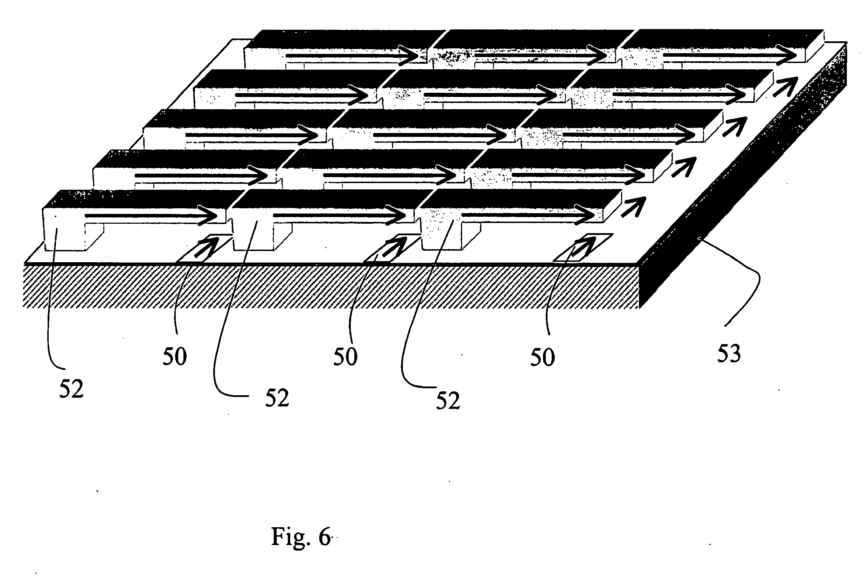

Figure 6 shows an additional embodiment in which, to improve performance, a plurality of cantilevers 52 are provided, equipped with corresponding magnetic field sensors 50, on the same substrate 53. This determines a greater amplitude of the output signals and a better signal-noise ratio.

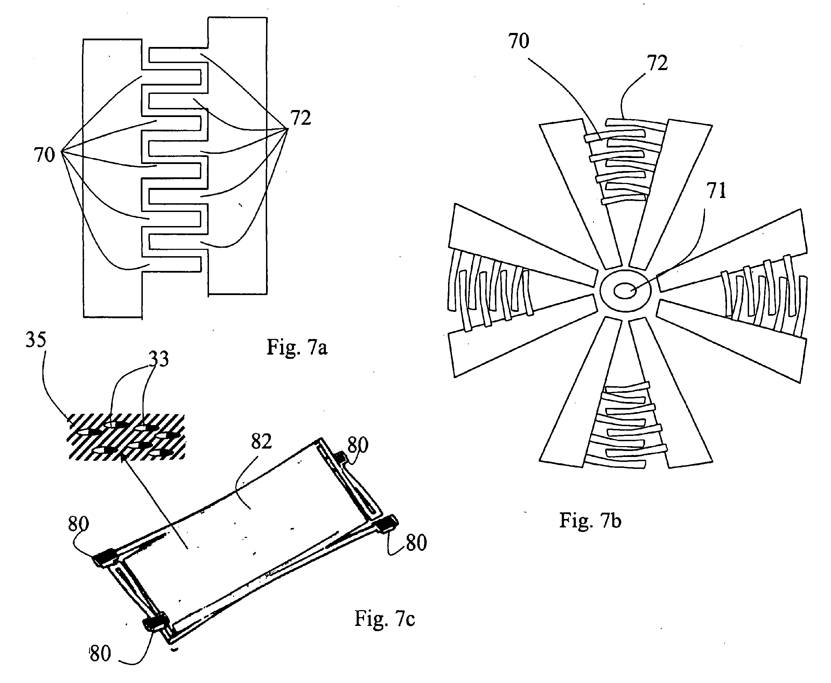

Figure 7a shows an alternative embodiment in which a plurality of cantilevers 72, in comb form, is arranged in interleaved fashion relative to a plurality of magnetic sensors 70, of the magnetoresistive type, according to the known accelerometer comb model.

In this case, the entire arm of the cantilever 72 can be subjected to the external forces and move, hence the measurement of even small forces is assured, even if the cantilevers 72, less massive because they are smaller, do not flex, or twist, by virtue of their simultaneous approach to the respective sensors 70 by effect of the displacement of the arm which makes them translate on the plane in integral fashion.

Such a sensor can also be constructed in the form of a gyroscopic comb sensor (gyroscope comb), obtaining pairs of interleaved structures of cantilever 72 and magnetic sensor 70, like those shown in Figure 7b, which are arranged radially around a spiral spring 71.

Figure 7c instead shows an embodiment according to the scheme of an inertial accelerometer, comprising a movable mass 82, which, subject to external forces, can twist giving rise to different magnetisation components on three orthogonal axes.

Said different components can be measured by means of a cross measurement of a plurality of magneto resistive sensors 80, which measure its deformation.

The movable mass 82, in accordance with the invention, is obtained by means of a material comprising the magnetic particles 33 in an elastic matrix 35, as in the case shown in Figure 3.

The solution described above allows to achieve important advantages relative to prior art solutions.

Advantageously, the sensor device according to the invention is a magnetic dynamometric sensor in thin film technology, easy to construct and provided with high robustness and sensitivity, achieved thanks to the adoption of magnetic elements made of elastic composite material, obtained by means of an elastic matrix including magnetic particles.

Said magnetic elements made of elastic composite material are particularly effective in relation to membrane devices and to cantilever devices, allowing the effective sensing of forces, pressures and accelerations.

The sensor device according to the invention allows to obtain advantages in terms of costs and performance in particular fields of application, for example at low frequency, relative to prior art sensors.

The use of composite materials, in particular in connection to the cantilever embodiment, advantageously allows mass production of the devices by means of injection and moulding processes.

Naturally, without altering the principle of the invention, the construction details and the embodiments may vary widely from what is described and illustrated purely by way of example herein, without thereby departing from the scope of the present invention.

The magnetic properties of the composite elastic material may be the most different, for example in regard to concentrations of magnetic particles, types and dimensions and shapes (simply spherical but also acicular) of the magnetic particles, provided they are able to confer a sufficient magnetisation to influence a magnetic sensor. The magnetic characteristics of the particles are defined by the material, by the dimensions and by the shape; in particular, every material has particular lattice symmetries and spin-orbit exchange interaction, which is manifested in strong interactions along the lattice directions (crystalline anisotropy); particle shape determines shape anisotropy effects which are manifested as an actual force field, the disposition of the magnetic moments of the magnetic material being strongly influenced by the shape of the particle. Said anisotropy interactions are strongly dependent on particle size (respectively on the volume and exterior surface), and, in particular as the dimension of the particles decreases, thermal energy (K_{B}T) is sufficient to exceed the anisotropy energies, substantially destroying the directions of easy magnetisation. Said interactions have different ranges of action, and different intensities for equal distance from the force centres. Therefore, by controlling particle size it is possible to cause one to dominate over the other, thereby defining the magnetic properties of the particle itself. Particle behaviour varies greatly according to temperature, as thermal energy tends to disrupt the ordering of the magnetic moments and competes with the aforesaid interaction energies; once the operating temperature is established, it is possible to construct, ad hoc, particles with desired magnetic properties starting from their material, dimension and shape.

The elastic material of the composite elastic material depend on the polymer or resin used for the matrix, and on its curing (heat treatment) conditions.

A pressure sensor device of the type described above can be used in a variety of applications requiring the sensing of a pressure, a force or an acceleration, possibly in association with other temperature sensors or other quantities and actuators.

However, clearly the proposed device can be applied in all dynamometric pressure measurements compatible with a magnetic dynamometric sensor device of the type comprising means for sensing a magnetic field imposed on said sensor means by a magnetisation of a movable structure associated to a source of magnetic field, said sensor means sensing, through variations in said magnetic field, displacements of said movable structure originated by the application of dynamometric quantities, where said movable structure comprises at least an elastically deformable magnetic part which provides said source of magnetic field.

## Claims

1. A magnetic dynamometric sensing device of the type comprising means (10; 40; 50; 70; 80) for sensing a magnetic field imposed on said sensor means (10; 40; 50; 70; 80) by a magnetisation (M) of a movable structure (32; 42; 52; 72; 82) associated to a source of magnetic field, said sensor means (10; 40; 50; 70; 80) detecting, through variations in said magnetic field, displacements of said movable structure (32; 42; 52; 72; 82) originated by the application of pressure or acceleration, (P, A) said movable structure (32; 42; 52; 72; 82) comprising at least an elastically deformable magnetic part which provides said source of magnetic field, **characterised in that** said elastically deformable magnetic part (32; 42; 52; 72; 82) being obtained by means of a composite magnetic material (34)and said composite magnetic material (34) comprises magnetic particles (33) contained in a resilient matrix (35).

2. The device of claim 1, **characterised in that** said elastically deformable magnetic part (32; 42; 52; 72; 82) comprises a resilient membrane (32; 43).

3. The device of claim 2, **characterised in that** said membrane (32) is associated to said sensor means through a compressible layer (31).

4. The device of claim 3, **characterised in that** said membrane (32) comprises the compressible layer (31) which is in the form of gel or foam or liquid.

5. The device of claim 4, **characterised in that** said membrane (32) is directly deposited on said sensor means (10; 40; 50; 70; 80), operating also as compressible layer (31).

6. The device of claim 1, **characterised in that** said elastically deformable magnetic part (32; 42; 52; 72; 82) comprises at least a cantilever (52; 72; 82).

7. The device of claim 6, **characterised in that** said sensor means (50; 70; 80) are positioned fixed relative to a free end (52b) of said at least one cantilever (52; 72; 82) and measure the variations in magnetic fields due to the change in position of said free end (52b).

8. The device of claim 7, **characterised in that** said at least one cantilever (52) is associated to a plurality of sensor means (50).

9. The device of claim 8, **characterised in that** said plurality of sensor means (50) is connected in a Wheatstone bridge configuration.

10. The device of claim 9, **characterised in that** in said Wheatstone bridge configuration said plurality of sensor means (50) comprises shielded sensors that operate only as electrical resistors and sensors associated to flux concentrators.

11. The device of claim 10, **characterised in that** in said Wheatstone bridge configuration said plurality of sensor means (50) comprises mutually oriented sensors in such a way that in the presence of magnetic field they are respectively positioned in parallel configuration and anti-parallel configuration.

12. The device as claimed in one or more of the claims from 7 through 11, **characterised in that** it comprises a plurality of cantilevers (52) on a same substrate (53).

13. The device of claim 7, **characterised in that** it comprises a plurality of cantilevers (72) and a plurality of sensors (70) arranged in interleaved fashion.

14. The device of claim 13, **characterised in that** said one plurality of cantilevers (72) and said plurality of sensors (70) arranged in interleaved fashion are positioned in the manner of a gyroscopic comb sensor.

15. The device as claimed in one of the claims 7 through 14, **characterised in that** said magnetic sensor (50) comprises an axis of easy magnetisation (Me), positioned orthogonal to the magnetisation (M) of said cantilever (52; 72) in the absence of imposed magnetic field.

16. The device of claim 1, **characterised in that** said elastically deformable magnetic part (82) comprises a movable mass of an inertial accelerometer.

17. The device of claim 1, **characterised in that** said sensor means (10; 40; 50; 70; 80) comprise at least a free magnetic layer (11) able to orient a temporary magnetisation (MT) associated thereto following the direction of the magnetic field imposed by said one movable structure.

18. The device of claim 17, **characterised in that** said free magnetic layer (11) is comprised in a magnetic device of the spin valve (10) type.

19. The device as claimed in one or more of the previous claims 1 to 16, **characterised in that** said sensor means (10; 40; 50; 70; 80) comprise one or more magnetoresistive devices.

20. A method for manufacturing dynamometric sensor device as claimed in claims 1 through 19, associating said movable structure (32; 42; 52; 72; 82) to a source of magnetic field by including at least an elastically deformable magnetic part which provides said source of magnetic field **characterised in that** it includes the step of making said elastically deformable magnetic part of composite magnetic material (34), comprising magnetic particles (33) contained in a resilient matrix (35).

21. The method of claim 20, **characterised in that** said step of making said elastically deformable magnetic part includes obtaining said elastically deformable magnetic part made of composite magnetic material (34) by means of a deposition process selected among photolithography, laser ablation, spinning or serigraphy of the composite material, or through a casting process or by evaporation.

22. The method of claim 20, **characterised in that** said deposition process comprises a step of chemically forming the magnetic particles (33) in a polymer and a subsequent reticulating step of said polymer.

23. The method of claim 20, **characterised in that** said deposition process provides for separately producing the magnetic particles and subsequently mixing said particles in a polymer, prior to a reticulating step.

24. The method of claim 23 **characterised in that** said mixing step includes subjecting said mixture of magnetic particles and polymer, prior to a reticulating step, to a casting process in a mould.

25. The method of claim 23 **characterised in that** said mixing step includes subjecting said mixture of magnetic particles and polymer, prior to a reticulating step, to an extrusion process by means of extruder.

26. The method of claim 23, **characterised in that** said mixing step includes subjecting said mixture of magnetic particles and polymer, prior to a reticulating step, to a process of pressure moulding with heated mould.

27. The method of claim 25 **characterised in that** said mixing step includes subjecting said mixture of magnetic particles and polymer, prior to a reticulating step, to an injection moulding process.

28. The method as claimed in one or more of the claims from 20 to 27, **characterised in that** includes the step of orienting said magnetic particles (33) by means of an external magnetic field during deposition process.

29. A dynamometric sensing system comprising the magnetic dynamometric sensor device as claimed in claim 17, **characterised in that** said dynamometric sensor device comprises an additional magnetic sensor device positioned remote relative to said magnetic dynamometric sensor device and able to sense the direction of the temporary magnetisation (MT) of said free magnetic layer (11).

30. System as claimed in claim 29, **characterised in that** said dynamometric sensor device is positioned on an element able to move in translation and/or in rotation and said additional magnetic field sensor is positioned on a fixed element.

## Patentansprüche

1. Magnetische, dynamometrische Erfassungsvorrichtung des Typs, der Einrichtungen (10; 40; 50; 70; 80) zum Erfassen eines Magnetfeldes, das auf die Sensoreinrichtungen (10; 40; 50; 70; 80) wirkt, durch Magnetisierung (M) einer beweglichen Struktur (32; 42; 52; 72; 82) enthält, die einer Quelle eines Magnetfeldes zugeordnet ist, wobei die Sensoreinrichtungen (10; 40; 50; 70; 80) durch Änderungen in dem Magnetfeld Verschiebungen der beweglichen Struktur (32; 42; 52; 72; 82) erfassen, die durch die Anwendung eines Drucks oder einer Beschleunigung (P, A) hervorgerufen werden, wobei die bewegliche Struktur (32; 42; 52; 72; 82) wenigstens einen elastisch verformbaren Magnetteil enthält, der die Quelle des Magnetfeldes bereitstellt, **dadurch gekennzeichnet, dass** der elastisch verformbare Magnetteil (32; 42; 52; 72; 82) mit Hilfe magnetischen Kompositmaterials (34) erzeugt ist und das magnetische Kompositmaterial (34) Magnetpartikel (33) enthält, die Bestandteil einer federnden Matrix (35) sind.

2. Vorrichtung nach Anspruch 1, **dadurch gekennzeichnet, dass** der elastisch verformbare Magnetteil (32; 42; 52; 72; 82) eine elastische Membran (32; 43) enthält.

3. Vorrichtung nach Anspruch 2, **dadurch gekennzeichnet, dass** die Membran (32) den Sensoreinrichtungen durch eine komprimierbare Schicht (31) zugeordnet ist.

4. Vorrichtung nach Anspruch 3, **dadurch gekennzeichnet, dass** die Membran (32) die komprimierbare Schicht (31) enthält, die die Gestalt eines Gels eines Schaums oder einer Flüssigkeit hat.

5. Vorrichtung nach Anspruch 4, **dadurch gekennzeichnet, dass** die Membran (32) direkt auf den Sensoreinrichtungen (10; 40; 50; 70; 80) abgeschieden ist und auch als komprimierbare Schicht (31) arbeitet.

6. Vorrichtung nach Anspruch 1, **dadurch gekennzeichnet, dass** der elastisch verformbare Magnetteil (32; 42; 52; 72; 82) wenigstens einen Kragarm (52; 72; 82) enthält.

7. Vorrichtung nach Anspruch 6, **dadurch gekennzeichnet, dass** die Sensoreinrichtungen (50; 70; 80) im Bezug auf ein freies Ende (52b) des wenigstens einen Kragarms (52; 72; 82) fixiert angeordnet sind und die Änderungen der Magnetfelder infolge einer Änderung der Position des freien Endes (52b) messen.

8. Vorrichtung nach Anspruch 7, **dadurch gekennzeichnet, dass** der wenigstens eine Kragarm (52) einer Vielzahl von Sensoreinrichtungen (50) zugeordnet ist.

9. Vorrichtung nach Anspruch 8, **dadurch gekennzeichnet, dass** die Vielzahl von Sensoreinrichtungen (50) in einer Wheatstone-Brückenkonfiguration verbunden ist.

10. Vorrichtung nach Anspruch 9, **dadurch gekennzeichnet, dass** in der Wheatstone-Brückenkonfiguration die Vielzahl von Sensoreinrichtungen (50) abgeschirmte Sensoren, die lediglich als elektrische Widerstände arbeiten, und Sensoren enthält, die Fluss-Verdichtungseinrichtungen zugeordnet sind.

11. Vorrichtung nach Anspruch 10, **dadurch gekennzeichnet, dass** in der Wheatstone-Brückenkonfiguration die Vielzahl von Sensoreinrichtungen (50) wechselseitig ausgerichtete Sensoren derart enthält, dass sie in der Gegenwart eines Magnetfeldes jeweils in paralleler und anti-paralleler Konfiguration angeordnet sind.

12. Vorrichtung nach wenigstens einem der Ansprüche 7 bis 11, **dadurch gekennzeichnet, dass** sie eine Vielzahl von Kragarmen (52) an demselben Substrat (53) enthält.

13. Vorrichtung nach Anspruch 7, **dadurch gekennzeichnet, dass** sie eine Vielzahl von Kragarmen (72) und eine Vielzahl von Sensoren (70) enthält, die verschachtelt angeordnet sind.

14. Vorrichtung nach Anspruch 13, **dadurch gekennzeichnet, dass** die eine Vielzahl von Kragarmen (72) und die Vielzahl von Sensoren (70), die verschachtelt angeordnet sind, in Gestalt eines gyroskopischen Kammsensors angeordnet sind.

15. Vorrichtung nach einem der Ansprüche 7 bis 14, **dadurch gekennzeichnet, dass** der Magnetsensor (50) eine Achse einfacher Magnetisierung (Me) hat, die orthogonal zur Magnetisierung (M) des Kragarms (52; 72) in Abwesenheit des wirkenden Magnetfeldes angeordnet ist.

16. Vorrichtung nach Anspruch 1, **dadurch gekennzeichnet, dass** der elastisch verformbare Magnetteil (82) eine bewegliche Masse eines Trägheitsbeschleunigungsmessers hat.

17. Vorrichtung nach Anspruch 1, **dadurch gekennzeichnet, dass** die Sensoreinrichtungen (10; 40; 50; 70; 80) wenigstens eine freie magnetische Schicht (11) haben, die in der Lage ist, eine vorübergehende Magnetisierung (MT), die ihr zugeordnet ist, der Richtung des Magnetfeldes folgend auszurichten, das von der einen beweglichen Struktur hervorgerufen wird.

18. Vorrichtung nach Anspruch 17, **dadurch gekennzeichnet, dass** die freie magnetische Schicht (11) in einer Magnetvorrichtung des Typs eines Spin-Valves (10) enthalten ist.

19. Vorrichtung nach einem der Ansprüche 1 bis 16, **dadurch gekennzeichnet, dass** die Sensoreinrichtungen (10; 40; 50; 70; 80) wenigstens eine magnetwiderstandsbeständige Vorrichtung enthalten.

20. Verfahren zum Herstellen einer dynamometrischen Sensorvorrichtung nach Anspruch 1 bis 19, das die bewegliche Struktur (32; 42; 52; 72; 82) einer Magnetfeldquelle zuordnet, indem wenigstens ein elastisch verformbarer Magnetteil eingearbeitet wird, der die Magnetfeldquelle bereitstellt, **dadurch gekennzeichnet, dass** es den Schritt des Herstellens des elastisch verformbaren Magnetteils eines magnetischen Kompositmaterials (34) umfasst, das Magnetpartikel (33) enthält, die in einer federnden Matrix (35) enthalten sind.

21. Verfahren nach Anspruch 20, **dadurch gekennzeichnet, dass** der Schritt des Herstellens des elastisch verformbaren Magnetteils das Gewinnen des elastisch verformbaren Magnetteils, der aus einem magnetischen Kompositmaterial (34) besteht, mit Hilfe eines Abscheidungsvorgangs umfasst, der mit Fotolithografie, Laserablation, Aufschleudern oder Serigraphie des Kompositmaterials, durch einen Gießvorgang oder durch Bedampfung erfolgt.

22. Verfahren nach Anspruch 20, **dadurch gekennzeichnet, dass** der Abscheidungsvorgang einen Schritt des chemischen Ausbildens der Magnetpartikel (33) in einem Polymer und einen anschließenden Vernetzungsschritt des Polymers beinhaltet.

23. Verfahren nach Anspruch 20, **dadurch gekennzeichnet, dass** der Abscheidungsvorgang das separate Herstellen der Magnetpartikel und das anschließende Mischen der Partikel in einem Polymer vor einem Vernetzungsschritt umfasst.

24. Verfahren nach Anspruch 23, **dadurch gekennzeichnet, dass** der Mischschritt umfasst, das Gemisch aus Magnetpartikeln und Polymer vor einem Vernetzungsschritt einem Gießvorgang in einer Gießform zu unterziehen.

25. Verfahren nach Anspruch 23, **dadurch gekennzeichnet, dass** der Mischschritt umfasst, das Gemisch aus Magnetpartikeln und Polymer vor einem Vernetzungsschritt einem Extrudiervorgang mit Hilfe eines Extruders zu unterziehen.

26. Verfahren nach Anspruch 23, **dadurch gekennzeichnet, dass** der Mischschritt umfasst, das Gemisch aus Magnetpartikeln und Polymer vor einem Vernetzungsschritt einem Vorgang des Druckgießens mit einer erwärmten Gussform zu unterziehen.

27. Verfahren nach Anspruch 25, **dadurch gekennzeichnet, dass** der Mischschritt umfasst, das Gemisch aus Magnetpartikeln und Polymer vor einem Vernetzungsschritt einem Spritzgießvorgang zu unterziehen.

28. Verfahren nach wenigstens einem der Ansprüche 20 bis 27, **dadurch gekennzeichnet, dass** es den Schritt des Ausrichtens der Magnetpartikel (33) mit Hilfe eines externen Magnetfeldes währen des Abscheidungsvorgangs umfasst.

29. Dynamometrisches Sensorsystem, enthaltend die magnetische, dynamometrische Sensorvorrichtung nach Anspruch 17, **dadurch gekennzeichnet, dass** die dynamometrische Sensorvorrichtung eine zusätzliche Magnetsensorvorrichtung enthält, die entfernt im Bezug auf die magnetische, dynamometrische Sensorvorrichtung angeordnet und in der Lage ist, die Richtung der vorübergehenden Magnetisierung (MT) der freien magnetischen Schicht (11) zu erfassen.

30. System nach Anspruch 29, **dadurch gekennzeichnet, dass** die dynamometrische Sensorvorrichtung auf einem Element angeordnet ist, das in der Lage ist, sich durch Translation und/oder Rotation zu bewegen, und der zusätzliche Magnetfeldsensor auf einem fixierten Element angeordnet ist.

## Revendications

1. Dispositif de capteur dynamométrique magnétique, du type comprenant des moyens (10; 40; 50; 70; 80) pour détecter un champ magnétique imposé sur les dits moyens de détection (10; 40 ; 50 ; 70 ; 80) par une magnétisation (M) d'une structure mobile (32; 42; 52; 72; 82) attachée à une source de champ magnétique, les dits moyens de détection (10; 40 ; 50 ; 70 ; 80) détectant, par l'intermédiaire des variations dudit champ magnétique, les déplacements de ladite structure mobile (32 ; 42 ; 52 ; 72 ; 82) émis par l'application de pression ou d'accélération (P, A), ladite structure mobile (32 ; 42; 52; 72; 82) comprenant au moins une partie magnétique déformable élastiquement qui fournit ladite source de champ magnétique, **caractérisé en ce que** ladite partie magnétique déformable élastiquement (32 ; 42 ; 52 ; 72 ; 82) est obtenue au moyen d'un matériau magnétique composite (34) et ledit matériau magnétique composite (34) comprend des particules magnétiques (33) contenues dans une matrice élastique (35).

2. Dispositif selon la revendication 1, **caractérisé en ce que** ladite partie magnétique déformable élastiquement (32 ; 42 ; 52 ; 72 ; 82) comprend une membrane élastique (32, 43).

3. Dispositif selon la revendication 2, **caractérisé en ce que** ladite membrane (32) est attachée auxdits moyens de détection par l'intermédiaire d'une couche compressible (31).

4. Dispositif selon la revendication 3, **caractérisé en ce** ladite membrane (32) comprend la couche compressible (31) qui est sous forme de gel ou de mousse ou de liquide.

5. Dispositif selon la revendication 4, **caractérisé en ce que** ladite membrane (32) est déposée directement sur lesdits moyens de détection (10; 40 ; 50 ; 70 ; 80), agissant également en tant que couche compressible (31).

6. Dispositif selon la revendication 1, **caractérisé en ce que** ladite partie magnétique déformable élastiquement (32 ; 42 ; 52 ; 72 ; 82) comprend au moins un porte-à-faux (52 ; 72 ; 82).

7. Dispositif selon la revendication 6, **caractérisé en ce que** lesdits moyens de détection (50 ; 70 ; 80) sont positionnés de manière fixe par rapport à une extrémité libre (52b) dudit au moins un porte-à-faux (52 ; 72 ; 82) et mesurent les variations des champs magnétiques dus au changement de position de ladite extrémité libre (52b).

8. Dispositif selon la revendication 7, **caractérisé en ce qu'**au moins un porte-à-faux (52) est attaché à une pluralité de moyens de détection (50).

9. Dispositif selon la revendication 8, **caractérisé en ce** ladite pluralité de moyens de détection (50) est connectée dans une configuration en pont de Wheatstone.

10. Dispositif selon la revendication 9, **caractérisé en ce que** dans ladite configuration en pont de Wheatstone, ladite pluralité de moyens de détection (50) comprend des capteurs protégés qui fonctionnent uniquement en tant que résistances et capteurs électriques attachés aux concentrateurs de flux.

11. Dispositif selon la revendication 10, **caractérisé en ce que** dans ladite configuration en pont de Wheatstone, ladite pluralité de moyens de détection (50) comprend des capteurs orientés les unes par rapport aux autres de manière à ce qu'en la présence de champ magnétique, ils soient respectivement positionnés en configuration parallèle et en configuration antiparallèle.

12. Dispositif selon l'une ou plusieurs des revendications de 7 à 11, **caractérisé en ce qu'**il comprend une pluralité de portes-à-faux (52) sur un même support (53).

13. Dispositif selon la revendication 7, **caractérisé en ce qu'**il comprend une pluralité de portes-à-faux (72) et une pluralité de capteurs (70) disposés de façon entrelacée.

14. Dispositif selon la revendication 13, **caractérisé en ce que** ladite pluralité de portes-à-faux (72) et ladite pluralité de capteurs (70) disposés de façon entrelacée sont positionnées comme un capteur en peigne gyroscopique.

15. Dispositif selon l'une ou plusieurs des revendications de 7 à 14, **caractérisé en ce que** ledit capteur magnétique (50) comprend un axe de magnétisation facile (Me), positionné de façon orthogonale par rapport à la magnétisation (M) dudit porte-à-faux (52; 72) en l'absence de champ magnétique imposé.

16. Dispositif selon la revendication 1, **caractérisé en ce que** ladite partie magnétique déformable élastiquement (82) comprend une masse mobile d'un accéléromètre inertiel.

17. Dispositif selon la revendication 1, **caractérisé en ce que** lesdits moyens de détection (10; 40 ; 50 ; 70 ; 80) comprennent au moins une couche magnétique libre (11) pouvant orienter une magnétisation temporaire (MT) y étant attachée suivant la direction du champ magnétique imposé par ladite structure mobile.

18. Dispositif selon la revendication 17, **caractérisé en ce que** ladite couche magnétique libre (11) est comprise dans un dispositif magnétique du type vanne de spin (10).

19. Dispositif selon l'une ou plusieurs des revendications précédentes de 1 à 16, **caractérisé en ce que** lesdits moyens de détection (10; 40; 50; 70; 80) comprennent au moins un ou plusieurs dispositifs magnétorésistants.

20. Procédé pour fabriquer un dispositif de capteur dynamométrique selon les revendications 1 à 19, associant ladite structure mobile (32 ; 42 ; 52 ; 72 ; 82) à une source de champ magnétique en incluant au moins une partie magnétique déformable élastiquement qui fournit ladite source de champ magnétique, **caractérisé en ce qu'**il comprend l'étape de fabrication de ladite partie magnétique déformable élastiquement en un matériau magnétique composite (34), comprenant des particules magnétiques (33) contenues dans une matrice élastique (35).

21. Procédé selon la revendication 20, **caractérisé en ce que** ladite étape de fabrication de ladite partie magnétique déformable élastiquement comprend l'obtention de ladite partie magnétique déformable élastiquement composée dudit matériau magnétique composite (34) au moyen d'un procédé de déposition choisi parmi la photolithographie, l'ablation laser, la rotation ou la sérigraphie du matériau composite ou par l'intermédiaire d'un procédé de moulage ou par évaporation.

22. Procédé selon la revendication 20, **caractérisé en ce que** ledit procédé de déposition comprend une étape de formation chimique des particules magnétiques (33) dans un polymère et une étape suivante de réticulation dudit polymère.

23. Procédé selon la revendication 20, **caractérisé en ce que** ledit procédé de déposition prévoit une production séparée des particules magnétiques puis le mélange desdites particules dans un polymère, avant une étape de réticulation.

24. Procédé selon la revendication 23, **caractérisé en ce que** ladite étape de mélange comprend la soumission dudit mélange de particules magnétiques et de polymère, avant l'étape de réticulation, à un procédé de coulage dans un moule.

25. Procédé selon la revendication 23, **caractérisée en ce que** ladite étape de mélange comprend la soumission dudit mélange de particules magnétiques et de polymère, avant l'étape de réticulation, à un procédé d'extrusion au moyen d'une extrudeuse.

26. Procédé selon la revendication 23, **caractérisée en ce que** ladite étape de mélange comprend la soumission dudit mélange de particules magnétiques et de polymère, avant l'étape de réticulation, à un procédé de moulage sous pression avec un moule chauffé.

27. Procédé selon la revendication 25, **caractérisée en ce que** ladite étape de mélange comprend la soumission dudit mélange de particules magnétiques et de polymère, avant l'étape de réticulation, à un procédé de moulage par injection.

28. Procédé selon l'une ou plusieurs des revendications de 20 à 27, **caractérisée en ce qu'**elle comprend la étape d'orientation desdites particules magnétiques (33) au moyen d'un champ magnétique externe lors du procédé de déposition.

29. Système de détection dynamométrique comprenant le dispositif de détection dynamométrique magnétique selon la revendication 17, **caractérisé en ce que** ledit capteur dynamométrique comprend un dispositif de détection magnétique supplémentaire situé à distance du dispositif de détection dynamométrique magnétique et pouvant détecter la direction de la magnétisation temporaire (MT) de ladite couche magnétique libre (11).

30. Système selon la revendication 29, **caractérisé en ce que** ledit dispositif de détection dynamométrique est positionné sur un élément étant mobile en translation et/ou en rotation et ledit capteur magnétique supplémentaire est positionné sur un élément fixe.
